(19) Europäisches Patentamt
European Patent Office
Office européen des brevets

(11) **EP 4 660 149 A1**

(12) **EUROPEAN PATENT APPLICATION**

(43) Date of publication:
**10.12.2025 Bulletin 2025/50**

(21) Application number: **25180346.6**

(22) Date of filing: **03.06.2025**

(51) International Patent Classification (IPC):
**C01G 53/506** (2025.01)   **H01M 4/525** (2010.01)

(52) Cooperative Patent Classification (CPC):
**H01M 4/525; C01G 53/506; H01M 4/505;
H01M 10/0525; H01M 2004/028**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.06.2024 KR 20240072509**

(71) Applicant: **SK On Co., Ltd.**
**Seoul 03161 (KR)**

(72) Inventors:
• **CHOI, Jae Ho**
**34124 Daejeon (KR)**
• **SON, Byoung Ki**
**34124 Daejeon (KR)**
• **LEE, Ha Eun**
**34124 Daejeon (KR)**
• **CHOI, Ji Hoon**
**34124 Daejeon (KR)**

(74) Representative: **Stolmár & Partner**
**Patentanwälte PartG mbB**
**Blumenstraße 17**
**80331 München (DE)**

(54) **CATHODE ACTIVE MATERIAL FOR LITHIUM SECONDARY BATTERY, CATHODE INCLUDING THE SAME, AND LITHIUM SECONDARY BATTERY INCLUDING THE SAME**

(57)    A cathode active material for a lithium secondary battery according to embodiments of the present disclosure includes lithium-metal oxide particles having a sphericity of 0.96 or less and an elongation of 0.25 to 0.5. The elongation is calculated as (1 - b/a). Here, a denotes the length of the major axis of the lithium-metal oxide particle in a cross-sectional image of the lithium-metal oxide particles observed using SEM, and b denotes the length of the minor axis of the lithium-metal oxide particle in the cross-sectional SEM image of the lithium-metal oxide particles.

[FIG. 1]

**Description**

[BACKGROUND OF THE INVENTION]

1. Field of the Invention

The disclosure of the present application relates to a cathode active material for a lithium secondary battery, a cathode including the cathode active material, and a lithium secondary battery including the cathode.

2. Description of the Related Art

A secondary battery is a battery that can be repeatedly charged and discharged. With rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are housed.

As the application scope of lithium secondary batteries continues to expand, longer cycle life (lifespan), high capacity and higher energy density are required. In the case of a cathode active material including a high-nickel lithium oxide with high-capacity characteristics, cycle life characteristics and operational stability of the lithium secondary battery may deteriorate due to an occurrence of cation disorder.

[SUMMARY OF THE INVENTION]

According to an aspect of the present disclosure, a cathode active material for a lithium secondary battery with improved cycle life and stability characteristics may be provided.

According to another aspect of the present disclosure, a cathode for a lithium secondary battery, which includes the cathode active material and exhibits improved cycle life and stability characteristics, may be provided.

In addition, according to another aspect of the present disclosure, a lithium secondary battery, which includes the cathode and exhibits improved cycle life and stability characteristics, may be provided.

A cathode active material for a lithium secondary battery according to exemplary embodiments of the present disclosure includes: lithium-metal oxide particles which have a sphericity of 0.96 or less, and an elongation of 0.25 to 0.5 according to Equation 1 below:

$$[\text{Equation 1}]$$

$$\text{Elongation} = 1 - b/a$$

(in Equation 1 above, a denotes the length of a major axis of the lithium-metal oxide particle in a cross-sectional SEM image of the lithium-metal oxide particles, and b denotes the length of a minor axis of the lithium-metal oxide particle in the cross-sectional SEM image).

According to exemplary embodiments, the lithium-metal oxide particles may have a sphericity of 0.85 to 0.96.

According to exemplary embodiments, the lithium-metal oxide particles may have a sphericity of 0.89 to 0.93.

According to exemplary embodiments, the lithium-metal oxide particles may have an elongation of 0.30 to 0.40.

According to exemplary embodiments, the lithium-metal oxide particles may include nickel, cobalt and manganese.

According to exemplary embodiments, a content of nickel in the lithium-metal oxide particles may be 80 mol% to 99 mol% based on the total number of moles of metals excluding lithium.

According to exemplary embodiments, a content of manganese in the lithium-metal oxide particles may be 0.1 mol% to 7 mol% based on the total number of moles of metals excluding lithium.

According to exemplary embodiments, the lithium metal oxide particles may have a secondary particle form.

According to exemplary embodiments, in Equation 1, a may be 10 μm to 32 μm.

According to exemplary embodiments, in Equation 1, b may be 5 μm to 16 μm.

According to exemplary embodiments, the lithium metal oxide particles may have a mean particle diameter (D50) of 10 μm to 24 μm.

A cathode for a lithium secondary battery according to exemplary embodiments of the present disclosure includes the above-described cathode active material for a lithium secondary battery.

According to exemplary embodiments, a ratio of the number of the lithium-metal oxide particles to the total number of particles included in the cathode for a lithium secondary battery may be 60% or more.

According to exemplary embodiments, the cathode for a lithium secondary battery may have an electrode density in the range of 3.4 g/cc to 4.0 g/cc.

A lithium secondary battery according to exemplary embodiments of the present disclosure includes: the above-described cathode for a lithium secondary battery; and an anode disposed opposite to the cathode.

The sphericity and elongation of the cathode active material for a lithium secondary battery according to an embodiment of the present disclosure may be controlled. Gaps and pores between the cathode active materials may be controlled, thereby improving the structural stability of the lithium secondary battery, and enhancing the capacity characteristics and efficiency of the battery.

The cathode active material for a lithium secondary battery of the present disclosure, the cathode for a lithium secondary battery including the cathode active material, and the lithium secondary battery including the cathode may be widely applied in green technology fields, such as electric vehicles, battery charging stations, as well as solar power generation, wind power generation, and the like, which use the batteries. The cathode active material for a lithium secondary battery of the present disclosure and the lithium secondary battery including the cathode active material may be used in eco-friendly electric vehicles, hybrid vehicles, and the like, which are aimed at mitigating climate change by reducing air pollution and greenhouse gas emission.

[BRIEF DESCRIPTION OF THE DRAWINGS]

The above and other objects, features and other advantages of the present disclosure will be more clearly understood from the following detailed description taken in conjunction with the accompanying drawings, in which:

FIGS. 1 and 2 are a schematic plan view and a cross-sectional view illustrating a lithium secondary battery according to exemplary embodiments, respectively;
FIG. 3A is a schematic scanning electron microscope (SEM) image illustrating a cathode active material for a lithium secondary battery according to exemplary embodiments;
FIG. 3B is a schematic SEM image illustrating a cross-section of the cathode active material for a lithium secondary battery according to exemplary embodiments;
FIG. 4A is a schematic SEM image illustrating a cathode active material for a lithium secondary battery according to comparative examples;
FIG. 4B is a schematic SEM image illustrating a cross-section of the cathode active material for a lithium secondary battery according to comparative examples;
FIG. 5A is cross-sectional SEM images of lithium-metal oxide particles according to examples, as displayed using image analysis software; and
FIG. 5B is cross-sectional SEM images of lithium-metal oxide particles according to comparative examples, as displayed using the image analysis software.

[DETAILED DESCRIPTION OF THE INVENTION]

According to embodiments of the present disclosure, a cathode active material for a lithium secondary battery (hereinafter, may be abbreviated as a "cathode active material"), which includes lithium-metal oxide particles having sphericity and elongation values within a predetermined range, is provided. In addition, a cathode for a lithium secondary battery (hereinafter, may be abbreviated as a "cathode"), which includes the cathode active material for a lithium secondary battery, is provided. In addition, a lithium secondary battery (hereinafter, may be abbreviated as a "secondary battery"), which includes the cathode for a lithium secondary battery, is also provided.

The terms "mean particle diameter," "D50," or "mean particle diameter (D50)" as used herein may refer to a particle diameter at which the volume accumulation percentage in a volume-based particle size distribution obtained from the volume of particles reaches 50%.

The term "secondary particle form" as used herein may refer to a secondary particle formed by the agglomeration of a plurality of primary particles. For example, the cathode active material may include secondary particles formed by assembling or agglomerating (e.g., greater than 10, 20 or more, 30 or more, 40 or more, 50 or more, etc.) primary particles into substantially one particle. For example, the cathode active material may include secondary particles formed by assembling or agglomerating lithium-metal oxide particles, each having a sphericity and an elongation within a predetermined range.

Hereinafter, the embodiments of the present disclosure will be described in detail. However, these embodiments are merely examples, and the present disclosure is not limited to the specific embodiments described as the example.

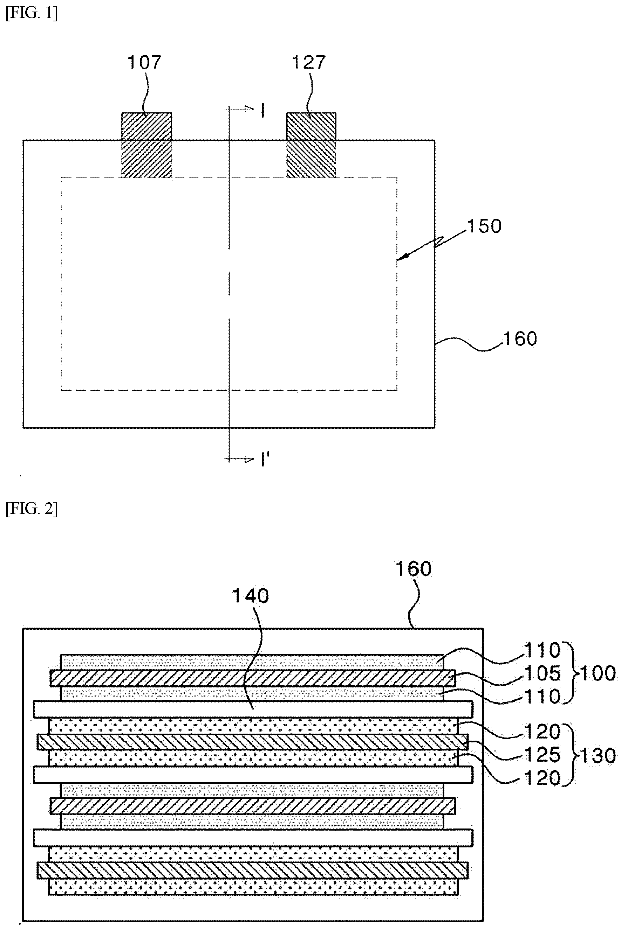

FIGS. 1 and 2 are a schematic plan view and a cross-sectional view illustrating a rechargeable lithium battery according to exemplary embodiments, respectively. For example, FIG. 2 is a cross-sectional view taken on line I-I' in FIG. 1.

Referring to FIGS. 1 and 2, the lithium secondary battery may include a cathode 100 including a cathode active material and an anode 130 disposed to face the cathode 100.

The cathode 100 may include a cathode active material layer 110 formed by applying the cathode active material to at least one surface of a cathode current collector 105.

The cathode current collector 105 may include stainless steel, nickel, aluminum, titanium, copper, or an alloy thereof. The cathode current collector 105 may also include aluminum or stainless steel subjected to surface treatment with carbon, nickel, titanium, copper or silver. For example, the cathode current collector 105 may have a thickness of 10 $\mu$m to 50 $\mu$m.

The cathode active material layer 110 may include a cathode active material. The cathode active material may include a compound capable of reversibly intercalating and deintercalating lithium ions.

According to exemplary embodiments, the cathode active material may include lithium-metal oxide particles.

According to exemplary embodiments, the lithium-metal oxide particles may include nickel (Ni). The lithium-metal oxide particles may further include at least one of cobalt (Co), manganese (Mn) and aluminum (Al).

In some embodiments, the cathode active material or lithium-metal oxide particles may include a layered structure or crystal structure represented by Formula 1 below.

$$[\text{Formula 1}] \qquad Li_xNi_aM_bO_{2+z}$$

In Formula 1, x, a, b and z may satisfy $0.9 \leq x \leq 1.2$, $0.6 \leq a \leq 0.99$, $0.01 \leq b \leq 0.4$, $-0.5 \leq z \leq 0.1$. As described above, M may include Co, Mn and/or Al.

The chemical structure represented by Formula 1 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing introduction and substitution of the additional elements.

In one embodiment, the cathode active material may further include auxiliary elements which are added to the main active elements, thus to enhance chemical stability thereof or the layered structure/crystal structure. The auxiliary element may be incorporated into the layered structure/crystal structure together to form a bond, and it should be understood that this case is also included within the chemical structure range represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may act as an auxiliary active element which contributes to the capacity/output activity of the cathode active material together with Co or Mn like Al.

According to exemplary embodiments, the cathode active material may include a nickel-cobalt-manganese (NCM)-based lithium oxide. In this case, an NCM-based lithium oxide having an increased nickel content may be used. Nickel may be provided as a metal associated with the output and capacity of the lithium secondary battery.

In some embodiments, the cathode active material may also include a lithium cobalt oxide-based active material, a lithium manganese oxide-based active material, a lithium nickel oxide-based active material, or a lithium iron phosphate (LFP)-based active material (e.g., $LiFePO_4$).

According to exemplary embodiments, the lithium-metal oxide particles may include the NCM-based lithium oxide.

According to exemplary embodiments, a content of nickel in the lithium-metal oxide particles may be 80 mol% or more based on the total number of moles of metals excluding lithium.

In some embodiments, the content of nickel in the lithium-metal oxide particle may be 80 mol% to 99 mol%, 80.5 mol% to 98.5 mol%, 81 mol% to 98 mol%, 81.5 mol% to 97 mol%, 82 mol% to 96 mol%, 82.5 mol% to 95.5 mol%, or 83 mol% to 95 mol% based on the total number of moles of metals excluding lithium.

A high-capacity cathode and a high-capacity secondary battery may be provided through the lithium-metal oxide particles including nickel within the above content range.

According to exemplary embodiments, a content of manganese in the lithium-metal oxide particles may be 7 mol% or less based on the total number of moles of metals excluding lithium.

In some embodiments, the content of manganese in the lithium-metal oxide particles may be 0.01 mol% to 7 mol%, 0.1 mol% to 7 mol%, 0.1 mol% to 6.5 mol%, 0.5 mol% to 6 mol%, 1 mol% to 5.5 mol%, 1.5 mol% to 5.5 mol%, or 2 mol% to 5 mol% based on the total number of moles of metals excluding lithium.

The cycle life stability and capacity retention characteristics of a lithium secondary battery may be improved by using lithium-metal oxide particles including manganese within the above content range.

For example, the content of cobalt in the lithium-metal oxide particles may be adjusted according to the nickel content and the manganese content. For example, the lithium-metal oxide particles may include nickel and manganese within the above-described ranges, and cobalt in the remaining amount.

According to exemplary embodiments, the content of cobalt in the lithium-metal oxide particles may be 0.1% by weight ("wt%") to 20 wt%, 0.5 wt% to 18 wt%, 1 wt% to 17 wt%, 1.5 wt% to 16 wt%, or 2 wt% to 15 wt%. The cobalt within the above content range may, together with manganese, contribute to maintaining electrical conductivity and improving the stability of the lithium-metal oxide particles.

According to exemplary embodiments, the lithium-metal oxide particles may have an elongation of 0.25 to 0.5.

The elongation may be calculated according to Equation 1 below.

[Equation 1]

$$\text{Elongation} = 1 - b/a$$

In Equation 1, a denotes the length of a major axis of the lithium-metal oxide particle in a cross-sectional image observed using SEM (a "cross-sectional SEM image") of the lithium-metal oxide particles, and b denotes the length of a minor axis of the lithium-metal oxide particle in the cross-sectional SEM image.

The "major axis" may refer to the longest straight line among straight lines connecting any two points on the surface of the particle in the cross-sectional SEM image of the lithium-metal oxide particles.

The "minor axis" may refer to the shortest straight line among straight lines connecting any two points on the surface of the particle in the cross-sectional SEM image of the lithium-metal oxide particles.

According to exemplary embodiments, the lithium-metal oxide particle may have a sphericity of 0.96 or less.

The sphericity may be calculated according to Equation 2 below.

[Equation 2]

$$\text{Sphericity} = 4\pi A/P^2$$

In Equation 2, A denotes the area of the lithium-metal oxide particle in the cross-sectional SEM image of the lithium-metal oxide particles, and P denotes the length of a perimeter of the lithium-metal oxide particle in the cross-sectional SEM image.

The length (a) of the major axis, the length (b) of the minor axis, the area (A), and the length (P) of the perimeter of the lithium-metal oxide particle may be obtained using an image analysis program.

For example, a cross-sectional SEM image of the lithium-metal oxide particles may be obtained, and the cross-sectional SEM image may be analyzed using the image analysis program (e.g., ImageJ). Accordingly, the length (a) of the major axis, the length (b) of the minor axis, the area (A), and the length (P) of the perimeter of the particle may be measured.

The elongation and the sphericity may be calculated from values obtained from the same measurement target. For example, the length (a) of the major axis, the length (b) of the minor axis, the area (A), and the length (P) of the perimeter of the particle may be measured from a single measurement target lithium-metal oxide particle, and the elongation and the sphericity values may be calculated based on these values.

The elongation may represent an average elongation calculated from a plurality of lithium-metal oxide particles. The sphericity may represent an average sphericity calculated from the plurality of lithium-metal oxide particles.

The plurality of lithium-metal oxide particles may refer to, for example, greater than 10, 15 or more, 20 or more, 25 or more, 30 or more, 35 or more, 40 or more, 45 or more, or 50 or more lithium-metal oxide particles.

In some embodiments, the lithium-metal oxide particles may have an elongation of 0.255 to 0.48, 0.26 to 0.46, 0.265 to 0.45, 0.27 to 0.43, 0.28 to 0.42, 0.29 to 0.41, 0.30 to 0.40, 0.305 to 0.395, 0.31 to 0.39, 0.315 to 0.385, 0.32 to 0.38, 0.325 to 0.375, or 0.33 to 0.37.

Within the above elongation range, internal voids of the lithium-metal oxide particles in the stacked structure may be reduced, thereby improving the electrode density. Accordingly, the energy density and structural stability of the cathode and secondary battery may be enhanced.

For example, in the case of lithium-metal oxide particles having an elongation exceeding the above range, the fragility of the lithium-metal oxide particles may increase, which may lead to a deterioration in the cycle life characteristics and operational stability of the secondary battery. On the other hand, in the case of lithium-metal oxide particles having an elongation less than the above range, a void area between the lithium-metal oxide particles may increase, resulting in a decrease in the electrode density.

According to exemplary embodiments, in Equation 1, a may be 10 $\mu$m to 32 $\mu$m.

In some embodiments, in Equation 1, a may be 11 $\mu$m to 30 $\mu$m, 12 $\mu$m to 28 $\mu$m, 12.5 $\mu$m to 26 $\mu$m, 13 $\mu$m to 24 $\mu$m, 13.5 $\mu$m to 22 $\mu$m, or 14 $\mu$m to 20 $\mu$m.

In exemplary embodiments, in Equation 1, b may be 5 $\mu$m to 16 $\mu$m.

In some embodiments, in Equation 1, b may be 5.5 $\mu$m to 15.5 $\mu$m, 6 $\mu$m to 15 $\mu$m, 6.2 $\mu$m to 14.8 $\mu$m, 6.5 $\mu$m to 14.5 $\mu$m, 6.8 $\mu$m to 14.2 $\mu$m, or 7 $\mu$m to 14 $\mu$m.

In exemplary embodiments, the lithium-transition metal oxide particles may have a mean particle diameter (D50) of 10 $\mu$m to 24 $\mu$m.

In some embodiments the lithium-transition metal oxide particles may have a mean particle diameter (D50) of 11 $\mu$m to 23 $\mu$m, 11.5 $\mu$m to 21.5 $\mu$m, 12 $\mu$m to 21 $\mu$m, 12.5 $\mu$m to 20 $\mu$m, or 13 $\mu$m to 18 $\mu$m.

The tap density of lithium-metal oxide particles having a value within the above range may be improved. Accordingly, breakage or destruction of the particles may be reduced during the electrode formation process.

In some embodiments, the lithium-metal oxide particle may have a sphericity of 0.85 to 0.96, 0.855 to 0.955, 0.86 to 0.95, 0.865 to 0.955, 0.87 to 0.95, 0.875 to 0.945, 0.88 to 0.94, 0.88 to 0.93, 0.882 to 0.929, 0.884 to 0.928, 0.885 to 0.928, 0.886 to 0.927, 0.888 to 0.926, or 0.890 to 0.926.

Within the above sphericity range, crack formation inside the lithium-metal oxide particles may be suppressed, and electrode packing property may be improved. Accordingly, the capacity of the secondary battery may increase, and its cycle life characteristics and operational stability may be improved.

For example, in the case of lithium-metal oxide particles having a sphericity exceeding the above range, a rate of crack formation due to volume expansion during charge and discharge may increase, which may lead to a deterioration in the cycle life characteristics of the secondary battery. For example, in the case of lithium-metal oxide particles having a sphericity less than the above range, a migration path of lithium ions may become longer, resulting in a decrease in the electrical conductivity of the secondary battery.

According to exemplary embodiments, the lithium-metal oxide particles may have a secondary particle form in which individual primary particles are aggregated. As the elongation and sphericity of the lithium-metal oxide particles having the secondary particle form are controlled, a secondary battery with stability while maintaining high electrical conductivity may be implemented.

According to exemplary embodiments, the lithium-metal oxide particles may have a tap density of 2.0 g/cc or more. In some embodiments, the lithium-metal oxide particles may have a tap density of 2.0 g/cc to 3.5 g/cc, 2.2 g/cc to 3.2 g/cc, 2.3 g/cc to 3.0 g/cc, or 2.4 g/cc to 2.8 g/cc.

The tap density may be a value measured by placing 50 g of the lithium-metal oxide particles in a 100 ml graduated cylinder and tapping 3,000 times.

In the case of lithium-metal oxide particles having a tap density within the above range, the occurrence of breaking or shattering during the electrode formation process may be reduced, thereby enhancing the initial charge/-discharge capacity of the secondary battery.

According to exemplary embodiments, the cathode 100 may include the cathode active material layer 110 including the above-described lithium-metal oxide particles. The cathode 100 may include the above-described cathode current collector 105.

According to exemplary embodiments, the cathode 100 may further include lithium-metal oxide particles whose elongation or sphericity does not fall within the above-described range.

For example, when the elongation or sphericity is calculated as an average, some lithium-metal oxide particles whose elongation or sphericity falls outside the above-described range may be included.

For example, the shape of the lithium-metal oxide particles may partially change during the drying and pressing process, and as a result some lithium-metal oxide particles whose elongation or sphericity falls outside the above-described range may be included in the cathode 100.

According to exemplary embodiments, based on the total number of particles included in the cathode active material of the cathode 100, a ratio of the number of lithium-metal oxide particles having an elongation value within the above-described range and a sphericity value within the above-described range may be 60% or more, 65% or more, 70% or more, or 75% or more.

Accordingly, a secondary battery with improved energy density, cycle life characteristics, and operational stability may be implemented.

According to exemplary embodiments, the cathode 100 may have an electrode density of 3.4 g/cc or more. In some embodiments, the electrode density may be 3.4 g/cc to 4.20 g/cc, 3.4 g/cc to 4.0 g/cc, 3.5 g/cc to 4.0 g/cc, 3.6 g/cc to 4.0 g/cc, 3.65 g/cc to 4.0 g/cc, or 3.68 g/cc to 4.00 g/cc.

The electrode density of the cathode 100 may be calculated by dividing the total weight of the cathode active material layer 110 by the total volume of the cathode active material layer 110.

The energy density and operational stability of a secondary battery including the cathode active material layer 110 having the electrode density within the above range may be improved.

For example, the cathode active material may be dispersed in a solvent to prepare a cathode slurry. The cathode current collector 105 may be coated with the cathode slurry, and then dried and pressed to prepare the cathode 100. The cathode slurry may further include a binder, and optionally further include a conductive material, a thickener or the like.

Non-limiting examples of a solvent used in the preparation of the cathode slurry may include N-methyl-2-pyrrolidone (NMP), dimethylformamide, dimethylacetamide, N,N-dimethylaminopropylamine, ethylene oxide, tetrahydrofuran and the like.

The binder may include polyvinylidene fluoride (PVDF), polyvinylidene fluoride-co-hexafluoropropylene, polyacrylonitrile, polymethylmethacrylate, acrylonitrile butadiene rubber (NBR), polybutadiene rubber (BR), styrene-butadiene rubber (SBR) and the like. In one embodiment, a PVDF-based binder may be used as the cathode binder.

The conductive material may be added to enhance the conductivity of the cathode slurry layer and/or the mobility of lithium ions or electrons. For example, the conductive material may include a carbon-based conductive material such as graphite, carbon black, acetylene black, Ketjen black, graphene, carbon nanotubes (CNTs), vapor-grown carbon fibers (VGCFs), carbon fibers, and/or a metal-based conductive material including tin, tin oxide, titanium oxide, or a perovskite material such as $LaSrCoO_3$, and $LaSrMnO_3$.

As the thickener, for example, carboxymethyl cellulose (CMC) may be used.

The anode 130 may include an anode current collector 125 and an anode active material layer 120 formed by coating at least one surface of the anode current collector 125 with an anode active material.

The anode active material may include a material capable of intercalating and deintercalating lithium ions. For example, carbon-based materials such as crystalline carbon, amorphous carbon, carbon composite, carbon fiber, etc.; a lithium alloy; silicon or tin may be used. Examples of the amorphous carbon may include hard carbon, cokes, mesocarbon microbead (MCMB) calcined at 1500°C or lower, mesophase pitch-based carbon fiber (MPCF) or the like. Examples of the crystalline carbon may include graphite-based carbon such as natural graphite, graphite cokes, graphite MCMB, graphite MPCF or the like. Other elements included in the lithium alloy may include, for example, aluminum, zinc, bismuth, cadmium, antimony, silicone, lead, tin, gallium, indium or the like.

For example, the anode current collector 125 may include a copper foil, a nickel foil, a stainless steel foil, a titanium foil, a nickel foam, a copper foam, a polymer substrate coated with conductive metal and the like. These may be used alone or in combination of two or more. For example, the anode current collector 125 may have a thickness of 10 $\mu$m to 50 $\mu$m.

In some embodiments, an anode slurry may be prepared by mixing the anode active material with a binder, a conductive material and/or a dispersant in a solvent. The anode slurry may be applied to the anode current collector, followed by compressing and drying to prepare the anode 130.

As the binder and the conductive material, materials which are substantially the same as or similar to the above-described materials may be used. In some embodiments, a binder for forming an anode may include, for example, an aqueous binder such as styrene-butadiene rubber (SBR) to ensure compatibility with a carbon-based active material, and may be used together with a thickener such as carboxymethyl cellulose (CMC).

In some embodiments, a separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fibers having a high melting point, polyethylene terephthalate fibers, etc.

According to exemplary embodiments, an electrode cell is defined by the cathode 100, the anode 130 and the separation membrane 140, and a plurality of electrode cells are stacked to form, for example, a jelly roll type electrode assembly 150. For example, the electrode assembly 150 may be formed by winding, stacking, z-folding, stack-folding, etc. the separation membrane 140.

The electrode assembly may be housed in a case 160 together with the electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

In some embodiments, a solid electrolyte may also be used in place of the above-described non-aqueous electrolyte. In this case, the lithium secondary battery may be manufactured in the form of an all-solid-state battery. In addition, a solid electrolyte layer may also be disposed between the cathode 100 and the anode 130 in place of the above-described separation membrane 140.

The solid electrolyte may include a sulfide-based electrolyte. As a non-limiting example, the sulfide-based electrolyte may include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, Z is Ge, Zn or Ga), $Li_2S-GeS_2$, $Li_2S-SiS_2-Li_3PO_4$, $Li_2S-SiS_2-Li_pMO_q$ (p and q are positive numbers, M is P, Si, Ge, B, Al, Ga or In), $Li_7-xPS_6-xCl_x$ ($0 \leq x \leq 2$), $Li_7-xPS_6-xBr_x$ ($0 \leq x \leq 2$), $Li_7-xPS_6-xI_x$ ($0 \leq x \leq 2$), etc. These may be used alone or in combination of two or more thereof.

In one embodiment, the solid electrolyte may also include an oxide-based amorphous solid electrolyte, such as, for example, $Li_2O-B_2O_3-P_2O_5$, $Li_2O-SiO_2$, $Li_2O-B_2O_3$, $Li_2O-B_2O_3-ZnO$, etc.

As shown in FIG. 2, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the case 160.

The lithium secondary battery may be manufactured, for example, in a cylindrical shape using a can, a prismatic shape, a pouch-type shape or a coin shape.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

**Examples and Comparative Examples**

**Example 1**

**(1) Preparation of cathode active material**

Dissolved oxygen in distilled water was removed by bubbling nitrogen gas ($N_2$) through the water for 24 hours. Nickel sulfate ($NiSO_4$), cobalt sulfate ($CoSO_4$) and manganese sulfate ($MnSO_4$) were each introduced as metal precursors into the distilled water from which the internal dissolved oxygen had been removed. The distilled water containing the metal precursors was introduced into a reactor at 50°C, and sodium hydroxide (NaOH) and ammonia water ($NH_3 \cdot H_2O$) were added. Then, a co-precipitation reaction was performed for 48 hours to form a metal hydroxide precursor having a particle size of about 10 $\mu$m to 24 $\mu$m. The metal hydroxide precursor was dried at 80°C for 12 hours, and then further dried at 110°C for 12 hours.

Specifically, sodium hydroxide and ammonia water were added to adjust the pH of the distilled water containing the metal precursor to about 11, followed by stirring for 4 hours. Thereafter, sodium hydroxide and ammonia water were further added to increase the pH to 12, followed by stirring for 30 hours to form the metal hydroxide precursor.

Thereafter, lithium hydroxide (LiOH) in an amount of 1.05 moles based on the total moles of metal in the metal hydroxide precursor was added, followed by uniform stirring at a stirring speed of 100 rpm for 5 minutes. The resulting mixture was placed in a calcination furnace, heated to 700°C at a heating rate of 2°C/min, and maintained at 700°C for 10 hours. During the heating and maintaining steps, oxygen was continuously supplied at a flow rate of 14 mL/min. After completion of the calcination, the product was naturally cooled to room temperature, and then subjected to pulverization and classification. The product was further pulverized by ball milling using zirconia balls to obtain lithium-metal oxide particles.

**Comparative Example 1**

Lithium-metal oxide particles were obtained in the same method as in Example 1, except that the stirring speed was changed to 200 rpm and the oxygen flow rate was changed to 20 mL/min.

In the examples and comparative examples, sodium hydroxide and ammonia water were added, then the stirring time, stirring speed and pH were adjusted, and the ball milling time and speed were controlled, thereby preparing lithium-metal oxide particles having the sphericity and elongation shown in Table 1 below. The composition of the lithium-metal oxide particles is also described in Table 1 below. The molar ratio of oxygen in the lithium-metal oxide particles was fixed at 2.0.

**(2) Measurement of elongation and sphericity**

The elongation and sphericity were calculated from cross-sectional images of the lithium-metal oxide particles observed using a scanning electron microscope (SEM).

Specifically, in the cross-sectional SEM image of the lithium-metal oxide particles, the major axis and minor axis of the lithium-metal oxide particles were measured using image analysis software (ImageJ), and the elongation was calculated according to Equation 1 below.

$$[\text{Equation 1}]$$

$$\text{Elongation} = 1 - b/a$$

In Equation 1, a denotes the length of the major axis of the lithium-metal oxide particle, and b denotes the length of the minor axis of the lithium-metal oxide particle.

From the cross-sectional SEM image of the lithium-metal oxide particles, the area and the length of a perimeter of the lithium-metal oxide particle were measured using the image analysis software (ImageJ), and the sphericity was calculated according to Equation 2 below.

$$[\text{Equation 2}]$$

$$\text{Sphericity} = 4\pi A/P^2$$

In Equation 2, A is the area of the lithium-metal oxide particle, and P is the length of the perimeter of the lithium-metal oxide particle.

[TABLE 1]

| Item | Cathode active material composition (Ni:Co:Mn) | Elongation | Sphericity |
|---|---|---|---|
| Example 1 | 88:7:5 | 0.35 | 0.924 |
| Example 2 | 88:7:5 | 0.33 | 0.890 |
| Example 3 | 88:7:5 | 0.42 | 0.921 |
| Example 4 | 88:7:5 | 0.26 | 0.918 |
| Example 5 | 88:7:5 | 0.35 | 0.870 |
| Example 6 | 94:4:2 | 0.34 | 0.925 |
| Example 7 | 94:4:2 | 0.34 | 0.889 |
| Example 8 | 94:4:2 | 0.41 | 0.920 |
| Example 9 | 94:4:2 | 0.27 | 0.919 |

(continued)

| Item | Cathode active material composition (Ni:Co:Mn) | Elongation | Sphericity |
|---|---|---|---|
| Example 10 | 94:4:2 | 0.34 | 0.870 |
| Example 11 | 83:13:4 | 0.34 | 0.925 |
| Example 12 | 83:13:4 | 0.34 | 0.891 |
| Example 13 | 83:13:4 | 0.42 | 0.921 |
| Example 14 | 83:13:4 | 0.26 | 0.920 |
| Example 15 | 83:13:4 | 0.35 | 0.871 |
| Comparative Example 1 | 88:7:5 | 0.64 | 0.980 |
| Comparative Example 2 | 88:7:5 | 0.13 | 0.980 |
| Comparative Example 3 | 88:7:5 | 0.63 | 0.921 |
| Comparative Example 4 | 88:7:5 | 0.15 | 0.925 |
| Comparative Example 5 | 88:7:5 | 0.32 | 0.980 |
| Comparative Example 6 | 94:4:2 | 0.63 | 0.980 |
| Comparative Example 7 | 94:4:2 | 0.12 | 0.980 |
| Comparative Example 8 | 94:4:2 | 0.64 | 0.922 |
| Comparative Example 9 | 94:4:2 | 0.15 | 0.924 |
| Comparative Example 10 | 94:4:2 | 0.33 | 0.979 |
| Comparative Example 11 | 83:13:4 | 0.64 | 0.981 |
| Comparative Example 12 | 83:13:4 | 0.13 | 0.981 |
| Comparative Example 13 | 83:13:4 | 0.64 | 0.919 |
| Comparative Example 14 | 83:13:4 | 0.15 | 0.926 |
| Comparative Example 15 | 83:13:4 | 0.32 | 0.978 |

## (3) Manufacture of secondary battery

A secondary battery was manufactured using the cathode active material described in Table 1 above.

Specifically, a cathode slurry was prepared by mixing 94 wt% of the cathode active material, 3 wt% of Denka Black as a conductive agent, and 3 wt% of polyvinylidene fluoride (PVDF) as a binder. Then, the cathode slurry was applied to an aluminum current collector, followed by drying and pressing to prepare a cathode. After pressing, the electrode density of the cathode was adjusted to 3.5 g/cc or more.

An anode slurry was prepared by mixing 93 wt% of natural graphite as an anode active material, 5 wt% of KS6 as a conductive material, which is a flake type conductive material, 1 wt% of styrene-butadiene rubber (SBR) as a binder, and 1 wt% of carboxymethyl cellulose (CMC) as a thickener. The anode slurry was applied to a copper substrate, followed by drying and pressing to prepare an anode.

The cathode and the anode prepared as described above were respectively notched into a predetermined size and stacked, then an electrode cell was fabricated by interposing a separator (polyethylene, thickness: 12 $\mu$m) between the cathode and the anode. Thereafter, tap parts of the cathode and the anode were welded, respectively. The assembly of the welded cathode/separator/anode was placed into a pouch, and three sides of the pouch were sealed, leaving one side open for electrolyte injection. At this time, a portion having the electrode tab was included in the sealing part. After injecting the electrolyte through the remaining open side except for the sealing part, the remaining open side was also sealed, followed by impregnation for 12 hours or more, to manufacture a lithium secondary battery.

The electrolyte used herein was prepared by dissolving 1M $LiPF_6$ in a mixed solvent of ethylene carbonate (EC) and ethyl methyl carbonate (EMC) (25/75; volume ratio), and then adding 1 wt% of vinylene carbonate (VC), 0.5 wt% of 1,3-propene sultone (PRS), and 0.5 wt% of lithium bis(oxalato)borate (LiBOB) thereto.

## Experimental Example

**(1) Image analysis of cathode active material**

SEM images of lithium-metal oxide particles according to Example 1 and Comparative Example 2 were observed.

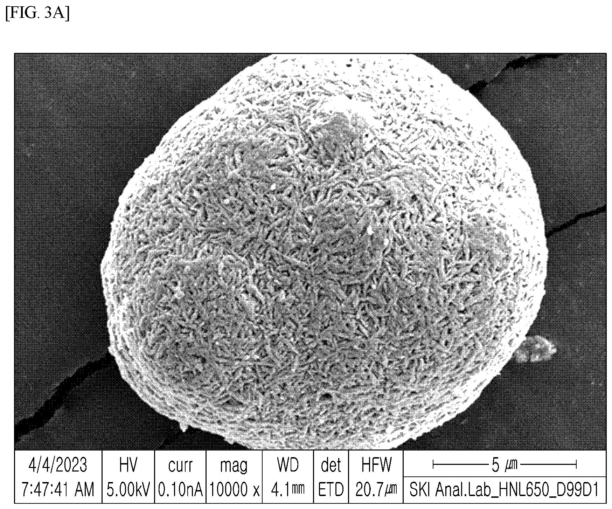

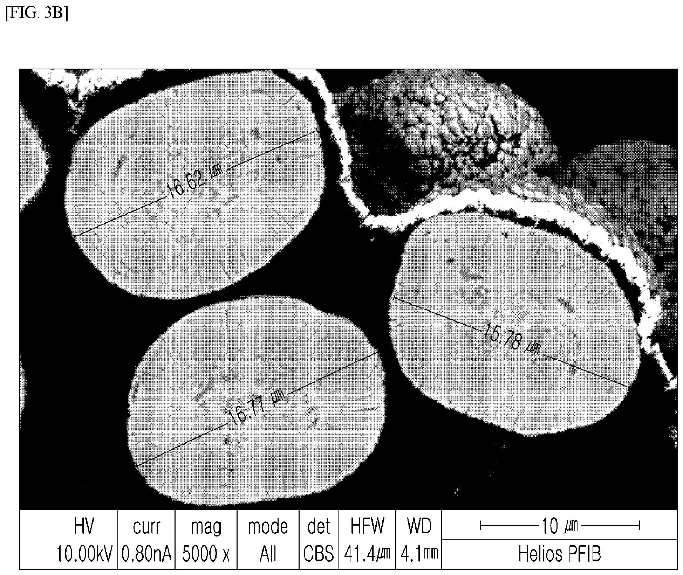

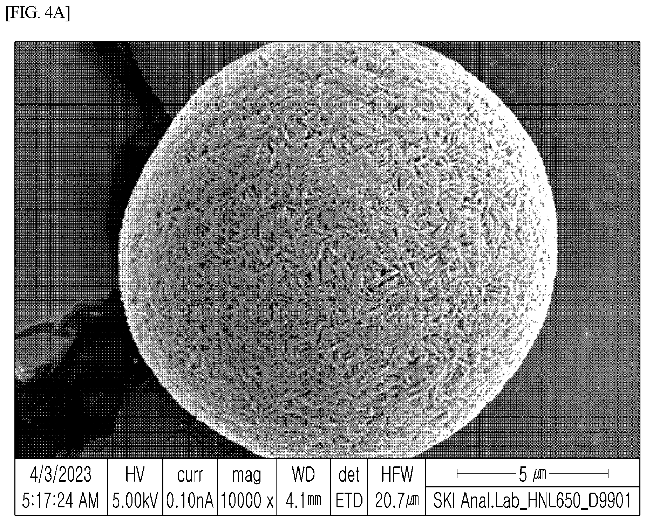

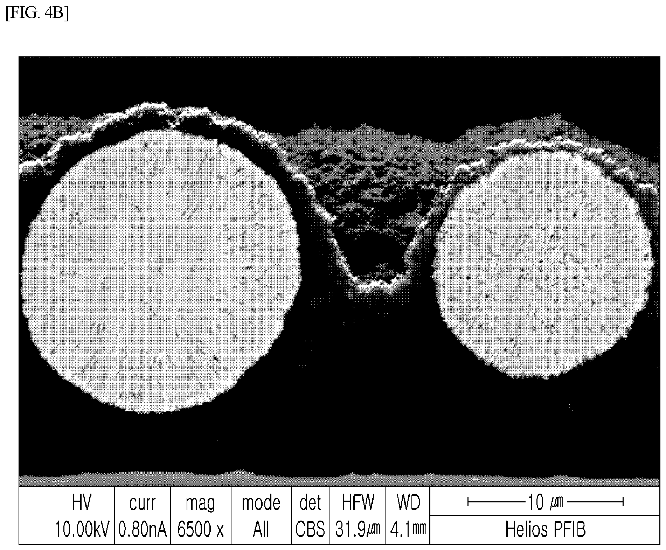

FIG. 3A is an SEM image illustrating the shape of lithium-metal oxide particles according to Example 1, and FIG. 3B is an SEM image illustrating a cross-section of lithium-metal oxide particles according to Example 1. FIG. 4A is an SEM image illustrating the shape of lithium-metal oxide particles according to Comparative Example 2, and FIG. 4B is an SEM image illustrating a cross-section of lithium-metal oxide particles according to Comparative Example 2.

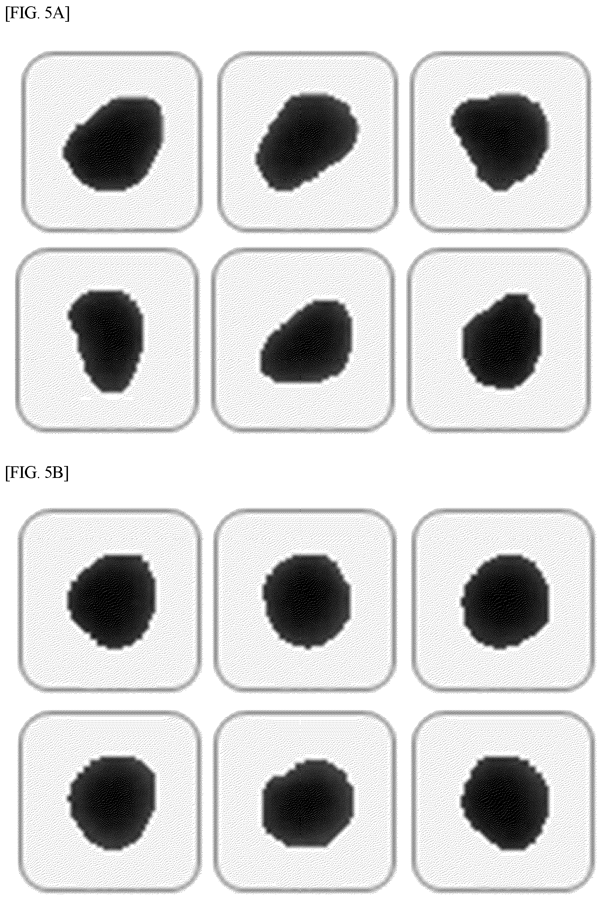

FIG. 5A is cross-sectional SEM images of lithium-metal oxide particles according to example 1, as displayed using image analysis software, and FIG. 5B is cross-sectional SEM images of lithium-metal oxide particles according to comparative example 2, as displayed using the image analysis software.

As shown in FIGS. 3A and 3B, the shape and cross-section of lithium-metal oxide particles according to the examples were observed to be close to an ellipse. As shown in FIGS. 4A and 4B, the shape and cross-section of lithium-metal oxide particles according to the comparative examples were observed to be close to a circle.

In addition, as shown in FIG. 5A, the cross-sections of the lithium-metal oxide particles according to the examples were observed to have various shapes that were not close to a circle. As shown in FIG. 5B, the cross-sections of the lithium-metal oxide particles according to the comparative examples were observed to be close to a circle.

**(2) Evaluation of initial discharge capacity and initial efficiency**

The lithium secondary batteries manufactured according to the examples and comparative examples were charged (CC/CV, rate 0.1 C, upper limit voltage 4.3 V, 0.05 C CUT-OFF) in a chamber at 25°C, and then the battery capacity (initial charge capacity) was measured. Subsequently, the batteries were discharged (CC 0.1 C 3.0 V CUT-OFF), and then the battery capacity (initial discharge capacity) was measured.

Initial capacity efficiency of each lithium secondary battery was calculated by dividing the measured initial discharge capacity by the measured initial charge capacity, then converting it into a percentage (%).

**(3) Life Characteristics Evaluation**

For the secondary batteries manufactured according to the examples and comparative examples, charging (CC/CV, 0.5C, 4.3V, 0.05C CUT-OFF) and discharging (CC, 1.0C, 3.0V CUT-OFF) at 45°C were defined as one cycle, and the discharge capacity after one cycle was measured.

The cycle was repeated 100 times, and the capacity retention rate was evaluated as the percentage obtained by dividing the discharge capacity at the 100th cycle by the discharge capacity at the 1st cycle.

The evaluation results are shown in Table 2 below.

[TABLE 2]

| Item | Electrode density (g/cc) | Initial discharge capacity (mAh/g) | Initial efficiency (%) | Capacity retention rate (100th cycle, %) |
|---|---|---|---|---|
| Example 1 | 3.71 | 211.5 | 89.7 | 94.5 |
| Example 2 | 3.69 | 210.6 | 89.5 | 93.9 |
| Example 3 | 3.70 | 211.0 | 89.6 | 93.0 |
| Example 4 | 3.70 | 211.2 | 89.5 | 92.9 |
| Example 5 | 3.68 | 211.0 | 88.5 | 91.8 |
| Example 6 | 3.72 | 220.6 | 89.1 | 93.4 |
| Example 7 | 3.68 | 219.7 | 88.9 | 92.8 |
| Example 8 | 3.69 | 219.5 | 88.9 | 92.0 |
| Example 9 | 3.70 | 211.0 | 89.0 | 91.9 |
| Example 10 | 3.68 | 211.0 | 88.5 | 90.9 |
| Example 11 | 3.73 | 205.3 | 90.5 | 95.9 |
| Example 12 | 3.71 | 204.4 | 90.3 | 95.3 |
| Example 13 | 3.70 | 204.0 | 90.3 | 94.2 |

(continued)

| Item | Electrode density (g/cc) | Initial discharge capacity (mAh/g) | Initial efficiency (%) | Capacity retention rate (100th cycle, %) |
|---|---|---|---|---|
| Example 14 | 3.72 | 204.5 | 90.2 | 93.9 |
| Example 15 | 3.69 | 204.1 | 88.9 | 91.5 |
| Comparative Example 1 | 3.74 | 211.7 | 89.6 | 91.2 |
| Comparative Example 2 | 3.62 | 211.6 | 90.1 | 91.1 |
| Comparative Example 3 | 3.72 | 211.4 | 89.4 | 92.5 |
| Comparative Example 4 | 3.69 | 211.5 | 89.6 | 92.3 |
| Comparative Example 5 | 3.68 | 211.8 | 89.6 | 91.1 |
| Comparative Example 6 | 3.73 | 220.8 | 89.0 | 90.1 |
| Comparative Example 7 | 3.62 | 220.7 | 89.5 | 90.0 |
| Comparative Example 8 | 3.71 | 220.5 | 88.8 | 91.4 |
| Comparative Example 9 | 3.68 | 220.6 | 89.0 | 91.2 |
| Comparative Example 10 | 3.67 | 220.9 | 89.0 | 90.0 |
| Comparative Example 11 | 3.76 | 205.5 | 90.4 | 92.6 |
| Comparative Example 12 | 3.64 | 205.4 | 90.9 | 92.5 |
| Comparative Example 13 | 3.75 | 205.2 | 90.2 | 92.9 |
| Comparative Example 14 | 3.71 | 205.3 | 90.4 | 92.7 |
| Comparative Example 15 | 3.70 | 205.6 | 90.4 | 92.5 |

As shown in Table 2, the lithium secondary battery including the lithium-metal oxide particles according to the examples, in which the elongation was 0.25 to 0.5 and the sphericity was 0.96 or less, exhibited improved cycle life characteristics.

Meanwhile, the lithium secondary battery including the lithium-metal oxide particles according to the comparative examples, in which the sphericity exceeded 0.96 or the elongation was outside the range of 0.25 to 0.5, exhibited deteriorated cycle life characteristics.

In Examples 5, 10 and 15, in which the sphericity was relatively low, the capacity retention rate was relatively decreased.

[Description of Reference Numerals]

100: Cathode

105: Cathode current collector

107: Cathode lead

110: Cathode active material layer

120: Anode active material layer

125: Anode current collector

127: Anode lead

130: Anode

140: Separation membrane

150: Electrode assembly

160: Case

**Claims**

1. A cathode active material for a lithium secondary battery, comprising lithium-metal oxide particles which have a sphericity of 0.96 or less, and an elongation of 0.25 to 0.5 according to Equation 1 below:

$$[\text{Equation 1}]$$

$$\text{Elongation} = 1 - b/a$$

(in Equation 1 above, a denotes the length of a major axis of the lithium-metal oxide particle in a cross-sectional SEM image of the lithium-metal oxide particles, and b denotes the length of a minor axis of the lithium-metal oxide particle in the cross-sectional SEM image).

2. The cathode active material for a lithium secondary battery according to claim 1, wherein the lithium-metal oxide particles have a sphericity of 0.85 to 0.96.

3. The cathode active material for a lithium secondary battery according to claim 1, wherein the lithium-metal oxide particles have a sphericity of 0.89 to 0.93.

4. The cathode active material for a lithium secondary battery according to any one of claims 1 to 3, wherein the lithium-metal oxide particles have an elongation of 0.30 to 0.40.

5. The cathode active material for a lithium secondary battery according to any one of claims 1 to 4, wherein the lithium-metal oxide particles comprise nickel, cobalt and manganese.

6. The cathode active material for a lithium secondary battery according to claim 5, wherein a content of nickel in the lithium-metal oxide particles is 80 mol% to 99 mol% based on the total number of moles of metals excluding lithium.

7. The cathode active material for a lithium secondary battery according to claim 5 or 6, wherein a content of manganese in the lithium-metal oxide particles is 0.1 mol% to 7 mol% based on the total number of moles of metals excluding lithium.

8. The cathode active material for a lithium secondary battery according to any one of claims 1 to 7, wherein the lithium metal oxide particles have a secondary particle form.

9. The cathode active material for a lithium secondary battery according to any one of claims 1 to 8, wherein, in Equation 1, a is 10 $\mu$m to 32 $\mu$m.

10. The cathode active material for a lithium secondary battery according to any one of claims 1 to 9, wherein, in Equation 1, b is 5 $\mu$m to 16 $\mu$m.

11. The cathode active material for a lithium secondary battery according to any one of claims 1 to 10, wherein the lithium metal oxide particles have a mean particle diameter (D50) of 10 $\mu$m to 24 $\mu$m.

12. A cathode for a lithium secondary battery comprising the cathode active material for a lithium secondary battery according to any one of claims 1 to 11.

13. The cathode for a lithium secondary battery according to claim 12, wherein a ratio of the number of the lithium-metal oxide particles to the total number of particles included in the cathode for a lithium secondary battery is 60% or more.

14. The cathode for a lithium secondary battery according to claim 12 or 13, wherein the cathode has an electrode density in the range of 3.4 g/cc to 4.0 g/cc.

15. A lithium secondary battery comprising:

the cathode for a lithium secondary battery according to any one of claims 12 to 14; and
an anode disposed opposite to the cathode.

[FIG. 1]

[FIG. 2]

[FIG. 3A]

| 4/4/2023 7:47:41 AM | HV 5.00kV | curr 0.10nA | mag 10000 x | WD 4.1mm | det ETD | HFW 20.7μm | 5 μm SKI Anal.Lab_HNL650_D99D1 |

[FIG. 3B]

| HV | curr | mag | mode | det | HFW | WD | ⊢————10 μm————⊣ |
|---|---|---|---|---|---|---|---|
| 10.00kV | 0.80nA | 5000 x | All | CBS | 41.4μm | 4.1mm | Helios PFIB |

[FIG. 4A]

| 4/3/2023 5:17:24 AM | HV 5.00kV | curr 0.10nA | mag 10000 x | WD 4.1mm | det ETD | HFW 20.7μm | ⊢————5 μm————⊣ SKI Anal.Lab_HNL650_D9901 |

[FIG. 4B]

| HV | curr | mag | mode | det | HFW | WD | ├──────10 μm──────┤ |
|---|---|---|---|---|---|---|---|
| 10.00kV | 0.80nA | 6500 x | All | CBS | 31.9μm | 4.1mm | Helios PFIB |

[FIG. 5A]

[FIG. 5B]

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/127543 A1 (HALDOR TOPSOE AS [DK]) 25 June 2020 (2020-06-25) * examples * * table 2 * * figures * ----- | 1-15 | INV. C01G53/506 H01M4/525 |
| X | EP 4 303 190 A2 (TOYOTA MOTOR CO LTD [JP]) 10 January 2024 (2024-01-10) * examples * * figure 1 * * paragraph [0096] * ----- | 1-15 | |
| X | US 2022/029157 A1 (SONG JUNG HOON [KR] ET AL) 27 January 2022 (2022-01-27) * examples * * figures * * tables * * claims * ----- | 1-15 | |
| | | | **TECHNICAL FIELDS SEARCHED (IPC)** C01G H01M |

The present search report has been drawn up for all claims

| Place of search | Date of completion of the search | Examiner |
|---|---|---|
| Munich | 22 October 2025 | Omegna, Anna |

## ANNEX TO THE EUROPEAN SEARCH REPORT
## ON EUROPEAN PATENT APPLICATION NO.

EP 25 18 0346

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2025

| Patent document cited in search report | Publication date | Patent family member(s) | Publication date |
|---|---|---|---|
| WO 2020127543 A1 | 25-06-2020 | BR 112021011949 A2 | 08-09-2021 |
| | | CN 113165906 A | 23-07-2021 |
| | | EP 3898525 A1 | 27-10-2021 |
| | | JP 2022515999 A | 24-02-2022 |
| | | KR 20210104038 A | 24-08-2021 |
| | | US 2022013762 A1 | 13-01-2022 |
| | | WO 2020127543 A1 | 25-06-2020 |
| EP 4303190 A2 | 10-01-2024 | CN 117239112 A | 15-12-2023 |
| | | EP 4303190 A2 | 10-01-2024 |
| | | JP 7616157 B2 | 17-01-2025 |
| | | JP 2023182420 A | 26-12-2023 |
| | | JP 2025039625 A | 21-03-2025 |
| | | KR 20230171871 A | 21-12-2023 |
| | | US 2023402600 A1 | 14-12-2023 |
| US 2022029157 A1 | 27-01-2022 | CN 113169330 A | 23-07-2021 |
| | | DE 112019005846 T5 | 02-09-2021 |
| | | JP 7166452 B2 | 07-11-2022 |
| | | JP 2022507171 A | 18-01-2022 |
| | | KR 20210124181 A | 14-10-2021 |
| | | US 2022029157 A1 | 27-01-2022 |
| | | WO 2020106126 A2 | 28-05-2020 |

EPO FORM P0459

For more details about this annex : see Official Journal of the European Patent Office, No. 12/82